# EUROPÄISCHE PATENTSCHRIFT

(11) **EP 3 111 609 B1**
(45) Veröffentlichungstag und Bekanntmachung des Hinweises auf die Patenterteilung: **21.02.2024**
(21) Anmeldenummer: 14818901.2
(22) Anmeldetag: 08.12.2014
(51) Int. Cl.: H04L 9/40, H04L 9/32

(54) **VERWENDUNG VON ZERTIFIKATEN MITTELS EINER POSITIVLISTE**
USE OF CERTIFICATES USING A POSITIVE LIST
UTILISATION DE CERTIFICATS AU MOYEN D'UNE LISTE POSITIVE

(30) Priorität: 28.02.2014 DE 102014203766
(43) Veröffentlichungstag der Anmeldung: 04.01.2017
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(74) Vertreter: Siemens Patent Attorneys
(86) Internationale Anmeldenummer: PCT/EP2014/076868
(87) Internationale Veröffentlichungsnummer: WO 2015/128014

(56) Entgegenhaltungen:
- EP-A2- 0 862 105
- COOPER NIST S SANTESSON MICROSOFT S FARRELL TRINITY COLLEGE DUBLIN S BOEYEN ENTRUST R HOUSLEY VIGIL SECURITY W POLK NIST D: "Internet X.509 Public Key Infrastructure Certificate and Certificate Revocation List (CRL) Profile; rfc5280.txt", 20080501, 1. Mai 2008 (2008-05-01), XP015057243, ISSN: 0000-0003
- Steffen Fries ET AL: "Securing Telecontrol in Smart Grid Environments", , 5 November 2013 (2013-11-05), XP055562455, Retrieved from the Internet: URL:https://ieeexplore.ieee.org/ielx7/6661 631/6661632/06661653.pdf?tp=&arnumber=6661 653&isnumber=6661632 [retrieved on 2019-02-27]

## Beschreibung

Die Erfindung betrifft Verfahren und Vorrichtungen zum Verwenden von Zertifikaten mittels einer Positivliste.

Bösartige Angriffe, auch bekannt als Hackerangriffe, auf Automatisierungsanlagen nehmen in letzter Zeit signifikant zu. Daher werden für Geräte, wie Fertigungsroboter oder Steuerungsgeräte, spezifische digitale Zertifikate verwendet, um für diese Geräte eine Authentisierung durchführen zu können. Diese Authenisierung gewährleistet beispielweise, dass nur positiv authentisierte Geräte in der Automatisierungsanlage betrieben werden können. Ebenso können auch personenbezogene digitale Zertifikate im Industrieumfeld verwendet werden, beispielsweise um einen Wartungszugang einem Techniker freizuschalten.

EP 0 862 105 A2 beschreibt ein Verfahren und eine Vorrichtung zum Bereitstellen von sicheren verteilten Datenverzeichnisdiensten, wobei ein Server einen Unterscheidungsnamen des Clients empfängt, und dann sein Verzeichnis auf Identifikationsinformationen und Zugangskontrollrechte für diesen spezifischen Kontext durchsucht.

Gemäß Dokument [1] ist "ein digitales Zertifikat [...] ein digitaler Datensatz, der bestimmte Eigenschaften von Personen oder Objekten bestätigt und dessen Authentizität und Integrität durch kryptografische Verfahren geprüft werden kann. Das digitale Zertifikat enthält insbesondere die zu seiner Prüfung erforderlichen Daten."

Ferner ist gemäß Dokument [2] "ein Attributzertifikat [...] ein digitales Zertifikat und stellt die von einer vertrauenswürdigen Stelle digital signierte Bindung zwischen bestimmten digitalen Informationen (Attributen) und einem weiteren somit attributierten digitalen Zertifikat dar." Das Dokument [2] führt weiter aus, dass "Attributzertifikate [...] typischerweise Eigenschaften aus[zeichnen], die entweder das Zertifikat selbst oder die Person näher charakterisieren".

Eine weitere Möglichkeit eine Gültigkeit von digitalen Zertifikaten zu beschränken ist aus einem Dokument [3] bekannt. Dort wird vorgeschlagen im Rahmen einer Authentisierungsroutine auch das digitale Zertifikat gegenüber einer weißen Liste (= white list oder certificate white list im Englischen). Die weiße Liste, auch Positivliste genannt, zeigt an, ob das zu authentisierende digitale Zertifikat von der zu authentisierenden Einheit authentisiert werden darf oder nicht. So kann die authentisierende Einheit die Positivliste nach einem Eintrag durchsuchen, der das zu authentisierende digitale Zertifikat bzw. eine Referenz hierzu aufzeigt. Wird der Eintrag gefunden, findet eine Authentisierung statt, ansonsten wird diese gestoppt.

Ein Nachteil aus dem Stand der Technik ist, dass es unklar ist, ob eine Authentisierung bzw. Gültigkeitsprüfung, auch Zertifikatsvalidierung genannt, eines digitalen Zertifikats auf Basis einer Positivliste erfolgt oder nicht. Zum anderen kann die authentisierende Einheit bereits auf Basis des vorliegenden Zertifikats eine Authentisierung des Geräts ohne Prüfung der Positivliste positiv durchführen, obwohl eine zusätzliche Prüfung des Zertifikats mittels der Positivliste notwendig wäre, beispielsweise weil das Gerät nur in einer vorbestimmten Umgebung betrieben werde darf.

Somit besteht eine Aufgabe darin, Verfahren und Vorrichtung anzugeben, die eine Erhöhung einer Sicherheit bei einer Verwendung von digitalen Zertifikaten zulässt.

Diese Aufgabe wird durch die Merkmale der abhängigen Ansprüche gelöst. Weiterbildungen der Erfindung sind den abhängigen Ansprüchen zu entnehmen.

Die Erfindung betrifft ein Verfahren zum Erzeugen einer Nachricht, wobei die Nachricht ein Zertifikat eines Geräts G umfasst und das Zertifikat eine Signatur zu einer Überprüfung einer Authentizität des Zertifikats aufweist,
dadurch gekennzeichnet, dass
der Nachricht eine Zulässigkeitsinformation für Ermittlung einer Zulässigkeit des Zertifikats anhand einer Positivliste hinzugefügt wird.

Die Erfindung zeigt den Vorteil, dass bei einer Autorisierung des Geräts mittels der Nachricht neben der Signatur auch ermittelt wird, ob das Zertifikat auf der Positivliste vorhanden ist. Hierdurch wird eine Sicherheit bei der Autorisierung des Geräts dadurch erhöht, dass sowohl die Überprüfung des Zertifikats anhand der Signatur als auch eine Ermittlung der Zulässigkeit durchgeführt werden muss. Der "Zwang" sowohl die Überprüfung als auch die Ermittlung durchzuführen wird durch die Nachricht gesteuert und ist somit nicht in zufälligerweise abhängig ob eine Einheit zum Autorisieren neben dem Überprüfen der Signatur des Zertifikats auch die Ermittlung des Zertifikats anhand der Positivliste durchführt. Somit wird vermieden, dass die Autorisierung erfolgreich ist, falls zwar die Überprüfung der Signatur positiv ist aber eine Ermittlung anhand der Positivliste unterbleibt. Zudem wird die Sicherheit der Autorisierung ferner dadurch erhöht, dass dem Gerät bei Mitteilung der Autorisierung klar ist, dass sowohl die Überprüfung als auch die Ermittlung durchgeführt und positiv sind.

In einem Beispiel kann die Nachricht ein Adressatenfeld, das Zertifikat, und die Zulässigkeitsinformation aufweisen. In einem anderen Beispiel umfasst die Nachricht Zertifikat und die Zulässigkeitsinformation. Zudem kann die Zulässigkeitsinformation separat von dem Zertifikat oder als Teil des Zertifikats in der Nachricht angeordnet sein. Im letzteren Fall kann die Nachricht auch ein neues Zertifikat beschreiben.

In einer Weiterbildung wird der Zulässigkeitsinformation eine Gültigkeitsinformation hinzugefügt, wobei die Gültigkeitsinformation zumindest einen der folgenden Parameter aufweist, der die, bei der Ermittlung der Zulässigkeit zu verwendenden, Positivliste WL charakterisiert:
- Zulässiger Aussteller der Positivliste;
- Maximal zulässiges Alter der Positivliste;
- Anwendungsumgebungsparameter AUP der Positivliste;
- Angabe REF der zu verwendende Positivliste.

Durch die Verwendung dieser Art der Zulässigkeitsinformation wird eine Sicherheit bei dem Autorisieren des Gerät weiter erhöht, denn durch die Gültigkeitsinformation wird eine Anzahl an Positivlisten, die zu der Ermittlung herangezogen werden können, beschränkt. Gegebenfalls liegt nach der Beschränkung keine Positivliste zur Ermittlung vor, sodass eine Autorisierung scheitert oder nur eine Autorisierung des Geräts mit einer niedrigen Sicherheitsstufe zugelassen wird.

In einer vorteilhaften Weiterbildung der Erfindung wird der Zulässigkeitsinformation eine erste Anwendungsinformation zum Durchführen von einer ersten Anwendung des Geräts hinzugefügt, wobei die erste Anwendungsinformation im Falle eines positiven Autorisierens des Geräts aufgrund (i) einer positiven Überprüfung der Authentizität der Signatur und (ii) eines positiven Ermittelns der Zulässigkeit des Zertifikats anhand der Positivliste angewendet werden kann. Hierdurch kann dem Gerät die durch die positive Autorisierung zulässigen Handlungsweisen, also Anwendungen, zugeordnet werden. Somit wird die Sicherheit dadurch erhöht, dass dem Gerät in Abhängigkeit von der Autorisierung die ersten Anwendungen, d.h. erste Kategorie von zumindest einer Anwendung, zugeordnet wird.

In einer vorteilhaften Weiterbildung der Erfindung wird der Zulässigkeitsinformation eine zweite Anwendungsinformation zum Durchführen von einer zweiten Anwendung des Geräts hinzugefügt, wobei die zweite Anwendungsinformation im Falle eines positiven Autorisierens des Geräts aufgrund (i) einer positiven Überprüfung der Authentizität der Signatur und (ii) einer negativen Ermittlung der Zulässigkeit des Zertifikats anhand der Positivliste angewandt werden kann. Somit wird die Sicherheit dadurch erhöht, dass dem Gerät in Abhängigkeit von der Überprüfung und der Ermittlung die zweite Anwendung, d.h. zweite Kategorie von zumindest einer Anwendung, zugeordnet wird, wobei als Anwendungen der zweiten Kategorie Anwendungen einer niedrigen Sicherheitsstufe in Betracht gezogen werden können.

In einer Weiterbildung der Erfindung wird der Zulässigkeitsinformation zumindest einer der folgenden Ausführungsparameter hinzugefügt wird, wobei der jeweilige Ausführungsparameter beschreibt, anhand welcher Eigenschaft des Zertifikats die Ermittlung durchgeführt werden kann:
- Seriennummer des Zertifikats;
- Aussteller des Zertifikats;
- Fingerprint des Zertifikates;
- Fingerprint des öffentlichen Schlüssels;
- Kopie des Zertifikates PI5.

Hierdurch kann die Sicherheit bei dem Autorisieren weiter erhöht werden, da die Nachricht der die Ermittlung durchführenden Einheit explizit mitteilen kann, welchen der Ausführungsparameter die Einheit zum Ausführen der Ermittlung einsetzen soll bzw. darf.

Die Erfindung betrifft auch ein Verfahren zum Autorisieren eines Geräts anhand einer Nachricht, wobei die Nachricht nach einem der zuvor beschriebenen Schritte erzeugt werden kann, wobei das Gerät für ein Anwenden einer ersten Kategorie an zumindest einer Anwendung autorisiert wird, falls
(a) die Überprüfung der Authentizität des Zertifikats positiv durchgeführt wird, und
(b) die Ermittlung der Zulässigkeit des Zertifikats ZERT anhand der Positivliste positiv durchgeführt wird.

Die Erfindung zeigt den Vorteil, dass bei der Autorisierung des Geräts mittels der Nachricht neben der Signatur auch ermittelt wird, ob das Zertifikat auf der Positivliste vorhanden ist. Hierdurch wird eine Sicherheit bei der Autorisierung des Geräts dadurch erhöht, dass sowohl die Überprüfung des Zertifikats anhand der Signatur als auch eine Ermittlung der Zulässigkeit durchgeführt werden muss. Der "Zwang" sowohl die Überprüfung als auch die Ermittlung durchzuführen wird durch die Nachricht gesteuert und ist somit nicht in zufälligerweise abhängig ob eine Einheit zum Autorisieren neben dem Überprüfen der Signatur des Zertifikats auch die Ermittlung des Zertifikats anhand der Positivliste durchführt. Somit wird vermieden, dass die Autorisierung erfolgreich ist, falls zwar die Überprüfung der Signatur positiv ist aber eine Ermittlung anhand der Positivliste unterbleibt. Zudem wird die Sicherheit der Autorisierung ferner dadurch erhöht, dass dem Gerät bei Mitteilung der Autorisierung klar ist, dass sowohl die Überprüfung als auch die Ermittlung durchgeführt und positiv sind.

Die Erfindung betrifft ferner ein Verfahren zum Autorisieren eines Geräts anhand einer Nachricht, insbesondere nach dem zuvor beschriebenen Verfahren, wobei die Nachricht VMSG nach einem der zuvor beschriebenen Schritte erzeugt werden kann, wobei das Gerät für ein Anwenden der zweiten Kategorie an zumindest einer Anwendung autorisiert wird, falls
(a) die Überprüfung der Authentizität des Zertifikats positiv durchgeführt wird, und
(b) die Ermittlung der Zulässigkeit des Zertifikats anhand der Positivliste negativ durchgeführt wird.

Hierbei ist neben den zuvor beschriebenen Vorteilen vorteilhaft, dass bei einer negativen Ermittlung die Autorisierung nicht zwangsweise scheitert, sondern auch die Möglichkeit besteht ein Autorisieren mit einer niedrigen Sicherheitsstufe, d.h. dass das Gerät keine sicherheitskritischen Anwendungen durchführen oder an keinen sicherheitskritischen Anwendungen teilnehmen darf. Somit kann das Gerät beispielsweise Updates durchführen aber selbst nicht mit anderen Geräten zum Durchführen einer Fertigung teilnehmen.

In einer vorteilhaften Weiterbildung wird die Ermittlung der Zulässigkeit des Zertifikats zumindest anhand eines der folgenden Ausführungsparameter durchgeführt, wobei der jeweilige Ausführungsparameter eine Eigenschaft des Zertifikats wiedergibt:
- Seriennummer des Zertifikats;
- Aussteller des Zertifikats;
- Fingerprint des Zertifikates;
- Fingerprint des öffentlichen Schlüssels;
- Kopie des Zertifikates.

Hierdurch kann die Sicherheit bei dem Autorisieren weiter erhöht werden, da die Nachricht der die Ermittlung durchführenden Einheit explizit mitteilen kann, welchen der Ausführungsparameter die Einheit zum Ausführen der Ermittlung einsetzen soll bzw. darf.

In einer Weiterbildung der Erfindung kann im Rahmen der Ermittlung der Zulässigkeit eine Gültigkeitsinformation ausgewertet werden, wobei die Gültigkeitsinformation zumindest einen der folgenden Parameter aufweist, der die, bei der Ermittlung der Zulässigkeit zu verwendenden, Positivliste charakterisiert:
- Zulässiger Aussteller der Positivliste;
- Maximal zulässiges Alter MAXG der Positivliste;
- Anwendungsumgebungsparameter (AUP) der Positivliste;
- Angabe REF der zu verwendenden Positivliste.

Durch die Verwendung dieser Art der Zulässigkeitsinformation wird eine Sicherheit bei dem Autorisieren des Gerät weiter erhöht, denn durch die Gültigkeitsinformation wird eine Anzahl an Positivlisten, die zu der Ermittlung herangezogen werden können, beschränkt. Gegebenfalls liegt nach der Beschränkung keine Positivliste zur Ermittlung vor, sodass eine Autorisierung scheitert oder nur eine Autorisierung des Geräts mit einer niedrigen Sicherheitsstufe zugelassen wird.

Eine Nachricht umfasst ein Zertifikat eines Geräts, wobei das Zertifikat eine Signatur zu einer Überprüfung einer Authentizität des Zertifikats ZERT aufweist, und eine Zulässigkeitsinformation für Ermittlung einer Zulässigkeit des Zertifikats anhand einer Positivliste. Zudem kann die Nachricht gemäß einem der Schritte zum Erzeugen der Nachricht aufgebaut sein. Die Vorteile der Nachricht sind den jeweiligen oben dargestellten Ausführungen zum Erzeugen der Nachricht zu entnehmen.

Die Erfindung betrifft auch eine erste Vorrichtung zum Erzeugen einer Nachricht, mit
- einer ersten Einheit zum Einfügen eines Zertifikats eines Geräts in die Nachricht, wobei das Zertifikat ZERT eine Signatur SIG zu einer Überprüfung einer Authentizität des Zertifikats aufweist,
- einer zweiten Einheit zum Hinzufügen einer Zulässigkeitsinformation für Ermittlung einer Zulässigkeit des Zertifikats anhand einer Positivliste.

Die zweite Einheit kann ferner derart ausgestaltet sein, dass die Zulässigkeitsinformation gemäß einem der dargestellten Ausführungen zum Erzeugen der Nachricht erweiterbar ist.

Die Vorteile bzgl. der ersten Vorrichtung sind identisch zu den jeweiligen oben dargestellten Ausführungen zum Erzeugen der Nachricht.

Zudem betrifft die Erfindung auch eine zweite Vorrichtung zum Autorisieren eines Geräts anhand einer Nachricht wobei die Nachricht nach einem der zuvor beschriebenen Schritte erzeugt werden kann, mit einer dritten Einheit zur Überprüfung einer Authentizität eines Zertifikats der Nachricht VMSG, einer vierten Einheit zur Ermittlung der Zulässigkeit des Zertifikats anhand der Positivliste, und einer fünften Einheit zum Autorisieren des Geräts für ein Anwenden einer ersten Kategorie K1 an zumindest einer Anwendung, falls die Überprüfung und die Ermittlung jeweils positiv sind.

Ferner kann die fünfte Einheit ausgebildet sein zum Autorisieren des Geräts für ein Anwenden einer zweiten Kategorie an zumindest einer Anwendung, falls die Überprüfung positiv und die Ermittlung negativ sind.

Ferner können die dritte Einheit, die vierte Einheit und die fünfte Einheit derart ausgebildet sein, dass zumindest eine der Weiterbildungen der Zulässigkeitsinformation gemäß einem dargestellten Verfahren ausführbar ist.

Die Vorteile bzgl. der jeweiligen zweiten Vorrichtung sind identisch zu den jeweiligen oben dargestellten Ausführungen zum Autorisieren der Nachricht.

Die Erfindung und ihre Weiterbildungen werden anhand von Zeichnungen näher erläutert. Im Einzelnen zeigen:
- Figur 1: Eine Übermittlung einer Nachricht von einem Gerät zu einer Überprüfungseinheit;
- Figur 2: Aufbau einer Nachricht umfassend ein Zertifikat und eine Zulässigkeitsinformation;
- Figur 3: Gültigkeitsinformationen als Teil der Zulässigkeitsinformation der Nachricht;
- Figur 4: Ablaufdiagramm und erste Vorrichtung zum Erzeugen der Nachricht;
- Figur 5: Ablaufdiagramm und zweite Vorrichtung zum Autorisieren eines Geräts mittels der Nachricht;
- Figur 6: Zertifikat, kodiert nach ASN.1 Standard.

Elemente mit gleicher Funktion und Wirkungsweise sind in den Figuren mit denselben Bezugszeichen versehen.

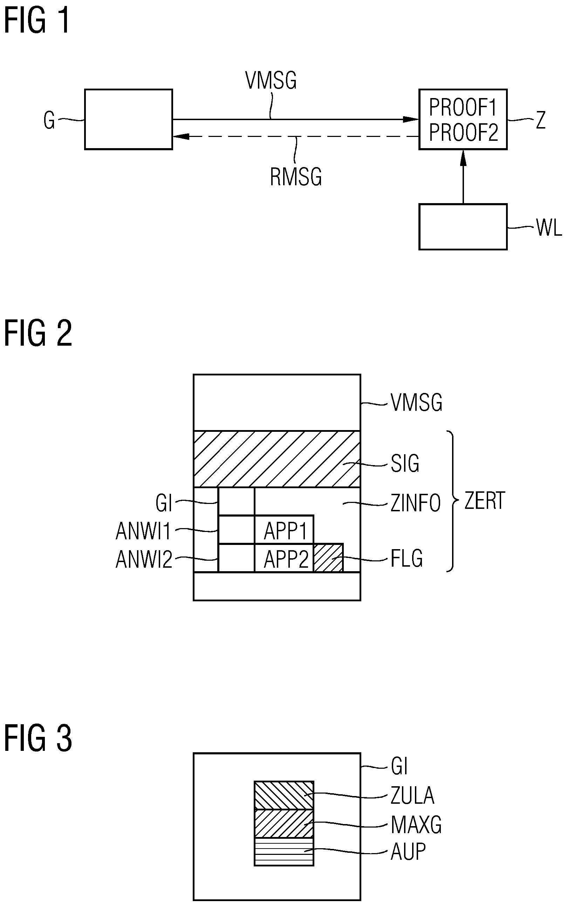

In einem ersten Ausführungsbeispiel der Erfindung soll in einer industriellen Anlage zur Abwasserreinigung eine defekte Pumpe ausgetauscht und vor einer Einbindung in die Steuerungskommunikation der Abwasserreinigungsanlage autorisiert werden. Hierzu montiert ein Servicetechniker anstelle der defekten Pumpe eine neue Pumpe G. Nachdem die neue Pumpe, nachfolgend auch Gerät G genannt, an das Stromnetz angeschlossen worden ist, erzeugt diese eine Nachricht VMSG, wobei die Nachricht VMSG ein Zertifikat der Pumpe G umfasst, siehe Figuren 1 und 2. Das Zertifikat ZERT weist seinerseits zumindest eine Signatur SIG auf, wobei anhand der Signatur SIG eine Überprüfung PROOF1 einer Authentizität bzw. Gültigkeit des Zertifikats ZERT durchgeführt werden kann.

Zudem umfasst die Nachricht VMSG ergänzt die der Pumpe G die Nachricht VMSG mit einer Zulässigkeitsinformation ZINFO. Die Zulässigkeitsinformation ZINFO hat den Zweck, dass hiermit einer Überprüfungseinheit Z mitgeteilt wird, dass neben der Überprüfung der Signatur SIG auch eine Ermittlung einer Zulässigkeit des Zertifikats ZERT anhand einer Positivliste WL durchgeführt werden soll. Die Zulässigkeitsinformation ist Vorzugsweise im Zertifikat der Pumpe G enthalten. Es ist jedoch auch möglich, dass die Zulässigkeitsinformation in einem anderen Teil der Nachricht VMSG enthalten ist.

Das Zertifikat der Pumpe G kann beispielsweise ein vom Hersteller der Pumpe ausgestelltes Gerätezertifikat sein, ein selbstsigniertes Zertifikat der Pumpe G, oder ein Zertifikat, das vom Betreiber der Abwasserreinigungsanlage für die Pumpe ausgestellt wurde und auf der Pumpe G vor deren Installation konfiguriert wurde. Auch ist es möglich, dass bei Inbetriebnahme der Pumpe G die Pumpe zuerst eine Zertifikatsanforderungsnachricht erstellt und diese aussendet, um ein Zertifikat für die Pumpe G, das in der Abwasserreinigungsanlage gültig ist, anzufordern. Ein Zertifikatsserver der Abwasserreinigungsanlage kann daraufhin der Pumpe G ein Zertifikat bereitstellen, das eine Zulässigkeitsinformation umfasst. Dieses kann daraufhin wie oben beschrieben von der Pumpe G für die Kommunikation mit der Überprüfungseinheit Z verwendet werden.

Figur 2 zeigt die Nachricht VSMG exemplarisch. Diese weist die Signatur SIG und ein oder mehrere Angaben für die Zulässigkeitsinformation ZINFO auf. Im ersten Ausführungsbeispiel weist die Zulässigkeitsinformation lediglich ein Hinweissignal FLG auf, wobei das Hinweissignal FLG anzeigt, dass das Zertifikat ZERT neben der Überprüfung auch mittels der Ermittlung PROOF2 der Zulässigkeit des Zertifikats ZERT anhand der Positivliste WL geprüft werden soll.

Die Positivliste WL, auch bekannt als white list bekannt, stellt eine Zusammenstellung von einem oder mehreren Einträgen dar, wobei ein jeweiliger Eintrag für ein spezifisches Zertifikat ausgebildet sein kann. Im Allgemeinen bedeutet die Ermittlung der Zulässigkeit des Zertifikats anhand der Positivliste, dass überprüft wird, ob das Zertifikat selbst bzw. eine abgeleitete Information des Zertifikats oder eine dem Zertifikat zuordenbare Information in der Positivliste vorhanden ist oder nicht. Ist kein Eintrag in der Positivliste für das zu überprüfende Zertifikat zu finden, so ist die Ermittlung negativ ansonsten positiv. Die Positivliste WL kann der Überprüfungseinheit Z von einer übergeordneten Instanz zur Verfügung gestellt werden und umfasst in diesem Beispiel eine Liste von Zertifikaten von Geräten, die in der industriellen Anlage, d.h. in dieser speziellen Umgebung, überhaupt nur positiv verifiziert werden können.

Im vorliegenden ersten Ausführungsbeispiel werden die Signatur SIG des Zertifikats ZERT mittels der Überprüfung PROOF1 auf Authentizität des Zertifikats ZERT positiv geprüft. Die Ermittlung PROOF2 der Zulässigkeit des Zertifikats anhand der Positivliste WL ergibt, dass das Zertifikat ZERT in der Positivliste WL hinterlegt ist und somit ist auch die zweite Überprüfung PROOF2 positiv. Da sowohl die erste Überprüfung PROOF1 als auch die zweite Überprüfung PROOF2 positiv sind, wird die Pumpe G zum Einsatz in der industriellen Anlage zugelassen. Dies wird nachfolgend der Pumpe G mittels einer Antwortnachricht RMSG mitgeteilt. Somit ist die Pumpe G für ein Anwenden einer ersten Kategorie K1 an Anwendungen autorisiert. So kann die Pumpe z.B. von einem Steuerrechner manipulationsgeschützt Steuerdaten empfangen, z.B. Steuerkommandos zum Aktivieren oder Deaktivieren der Pumpe. In einem anderen Beispiel kann die Pumpe z.B. geschützt Diagnosedaten einem Diagnoseserver der Abwasserreinigungsanlage bereitstellen.

Neben der Möglichkeit der Überprüfungseinheit Z mittels des Hinweissignals FLG mitzuteilen, dass sowohl eine Überprüfung PROOF1 als auch eine Ermittlung PROOF2 durchzuführen sind, können der Überprüfungseinheit Z noch Gültigkeitsinformationen GI mitgegeben werden, die die Überprüfungseinheit Z zu einer Verifikation der Gültigkeit der Positivliste WL im Rahmen der Ermittlung veranlasst, siehe Figur 3. Hierzu kann die Gültigkeitsinformation GI beispielsweise einen oder mehrere der folgenden Parameter aufweisen:
- Zulässige(r) Aussteller ZULA der Positivliste WL:
   Hierdurch wird angezeigt, dass bei der Ermittlung der Zulässigkeit des Zertifikats ZERT nur diejenigen Positivlisten WL benutzt werden dürfen, die von einem oder mehreren durch die Gültigkeitsinformation zulässig definierten Aussteller erstellt worden sind, beispielsweise muss das Zertifikat der Pumpe auf einer Positivliste der Firma Siemens oder auf einer Positivliste des Betreibers der Abwasserreinigungsanlage verzeichnet sein.
- Maximal zulässiges Alter MAXG der Positivliste WL:
   Hierbei wird ermittelt, wie alt die der Ermittlung PROOF2 zugrundeliegende Positivliste WL ist. Beispielsweise zeigt das maximal zulässige Alter MAXG einen Zeitraum von fünf Wochen an. Eine von mehreren möglichen zur Ermittlung der Zulässigkeit heranzuziehenden Positivlisten ist bereits vor sechs Wochen erzeugt worden. Daher wird diese Positivliste im Rahmen der Ermittlung nicht mehr eingesetzt, da diese älter als fünf Monate ist.
- Anwendungsumgebungsparameter AUP der Positivliste WL:
   Hierbei kann die Nachricht VMSG eine Information über den Einsatzort bzw. die Umgebung des Gerätes G anzeigen. Beispielsweise wurde der Pumpe G nach Anschluss an das Stromnetz eine IP-Adresse einer bestimmten Domain zugewiesen, z.B. 192.168.180.x. Der Anwendungsumgebungsparameter AUP wird zu 192.168.180.x gesetzt. Durch die Überprüfungseinheit Z wird bei der Auswahl einer oder mehrerer Positivlisten WL für die Ermittlung der Zulässigkeit geprüft, ob die jeweilige Positivliste für den jeweiligen Anwendungsumgebungsparameter AUP zugelassen ist. Beispielsweise ist eine erste Positivliste nur für einen Anwendungsumgebungsparameter von 168.180.180.x und eine zweite Positivliste für einen Anwendungsumgebungsparameter 168.178.180.x zugelassen. Somit wird durch die Ermittlung der Zulässigkeit lediglich die zweite Positivliste zur Prüfung der Zulässigkeit verwendet. Im Allgemeinen beschreibt der Anwendungsumgebungsparameter AUP ein oder mehrere spezifische Eigenschaften, die einen Einsatzort des Geräts, im vorliegenden Fall der Pumpe G, näher beschreiben. Neben der IP-Adresse können dies auch Temperatur, Luftfeuchtigkeit, spezifische Eigenschaften von das Gerät umgebende weitere Geräte wie MAC-Adressen oder IP-Adressen sein, oder auch Informationen aus Funkdaten wie Identifikationsmerkmale eines drahtlosen WLAN (WLAN - Wireless Local Area Network), Netzes oder einer GPS basierten Standortinformation (GPS - Global Positioning System) sein.

In einer Erweiterung des ersten Ausführungsbeispiels kann der Zulässigkeitsinformation ZINFO noch eine erste Anwendungsinformation ANWI1 zum Durchführen von einer ersten Anwendung APP1 des Geräts G hinzugefügt werden. Diese Anwendungsinformation AUTH1 zeigt an, welche Anwendung bzw. Anwendungen APP1 das Gerät G durchführen darf, falls sowohl die Überprüfung PROOF1 als auch die Ermittlung PROOF2 der Zulässigkeit positiv sind. Beispielsweise darf in diesem Fall die Pumpe auch in einem kritischen Bereich der industriellen Anlage betrieben werden, z.B. in einem Bereich bei dem die Pumpe sehr heiße und sehr kalte Medien pumpen muss. So kann mit Hilfe der Angabe der ersten Anwendung APP1 angezeigt werden, in welchen Bereichen der industriellen Anlage die Pumpe eingesetzt werden darf. Somit wird die Zulässigkeit des Zertifikats für die erste Anwendung ermittelt.

In einer Weiterbildung des Beispiels kann die Zulässigkeitsinformation ZINFO durch eine zweite Anwendungsinformation ANWI2 zum Durchführen einer oder mehrerer zweiter Anwendungen APP2 ergänzt werden. Hierbei wird angegeben, welche Aufgaben bzw. Anwendungen das Gerät durchführen darf, falls die Überprüfung PROOF1 positiv ist und Ermittlung PROOF2 der Zulässigkeit negativ verlief. Dies bedeutet, dass zwar die Signatur des Zertifikats gültig ist, jedoch das Zertifikat (oder Referenzen auf das Zertifikat) auf keiner gültigen Positivliste der Überprüfungseinheit Z zugänglich ist. Eine mögliche zweite Anwendung APP2 kann in diesem Fall derart gestaltet sein, dass die Pumpe G in der industriellen Anlage nicht eingesetzt werden darf. In einer anderen Ausgestaltung kann der Pumpe G lediglich eine nichtkritische Aufgabe übertragen werden, wie beispielsweise ein Einsatz zum Pumpen von Medien in einem nichtkritischen Temperaturbereich, beispielsweise von 10 bis 25°C. Ferner könnte eine Ausgestaltung der zweiten Anwendung derart durchgeführt werden, dass die Pumpe zwar an einer Kommunikation mit einem oder mehreren benachbarten Geräten und der Überprüfungseinheit teilnehmen darf, selbst jedoch kein Medium pumpen darf.

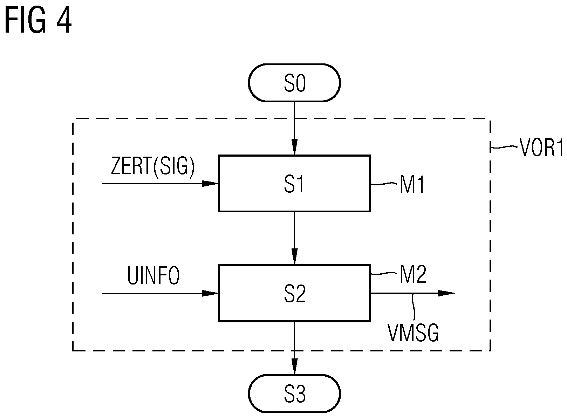

Das Erzeugen der Nachricht VMSG wird anhand von Figur 4 näher erläutert. Diese zeigt vier Schritte S0,...,S3, die ein Ablaufdiagramm zur Erzeugung darstellen. Ferner verkörpert Figur 4 auch eine erste Vorrichtung VOR1 mit einer ersten Einheit M1 und einer zweiten Einheit M2 zum Durchführen der Schritte zum Erstellen der Nachricht.

In einem Schritt S0 startet das Ablaufdiagramm.

In einem ersten Schritt S1, realisiert durch die erste Einheit M1, wird das Zertifikat umfassend zumindest die Signatur SIG erzeugt.

In einem zweiten Schritt S2 wird der Nachricht VMSG die Zulässigkeitsinformation ZINFO hinzugefügt. Dieser zweite

Schritt S2 wird durch die zweite Einheit M2 ausgeführt. Das Hinzufügen der Zulässigkeitsinformation ZINFO zu der Nachricht VMSG kann insbesondere dadurch erfolgen, dass das Zertifikat, das die Zulässigkeitsinformation umfasst, der Nachricht ZINFO hinzugefügt wird.

Das Ablaufdiagramm gemäß Figur 2 wird in einem dritten Schritt S3 beendet.

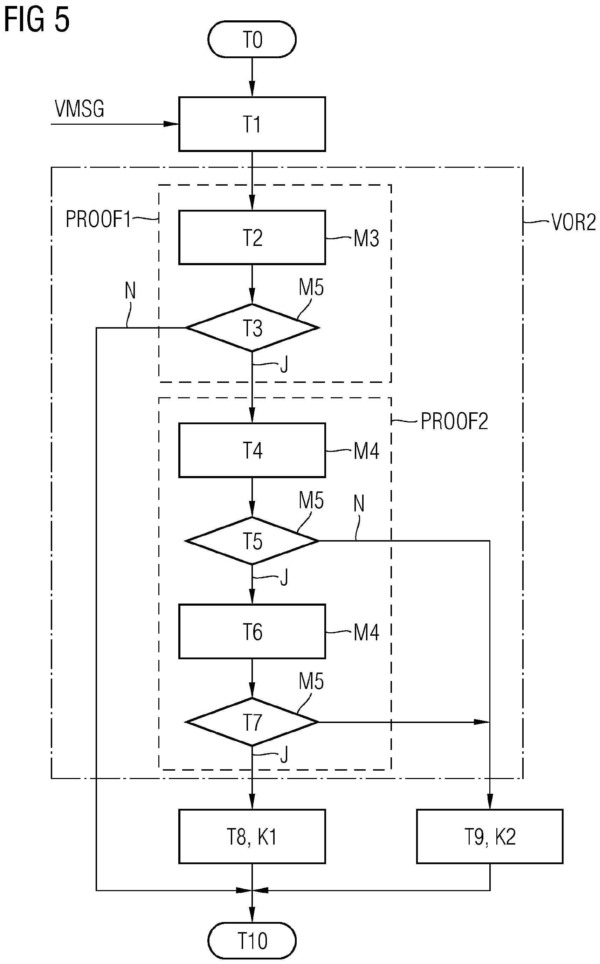

In einem weiteren Ausführungsbeispiel sollen spezifische Schritte zum Autorisieren der Pumpe anhand der Nachricht VMSG mit Hilfe von Figur 5 näher erläutert werden. Figur 5 zeigt zum einen ein Ablaufdiagramm mit den Schritten T0 bis T10 sowie auch mehrere Einheiten M3,..., M5 zum Durchführen der Schritte. Die Einheiten verkörpern eine zweite Vorrichtung VOR2.

Das Ablaufdiagramm startet im Schritt T0.

Im ersten Schritt T1 empfängt die zweite Vorrichtung V2 die Nachricht VMSG. Für die Darstellung von Figur 5 wird angenommen, dass die Nachricht VMSG neben dem Zertifikat auch die Zulässigkeitsinformation ZINFO umfasst, wobei die Zulässigkeitsinformation die Gültigkeitsinformation GI vom Typ maximal zulässiges Alter MAXG der Positivliste WL umfasst. Vorzugsweise ist die Zulässigkeitsinformation ZINFO im Zertifikat eincodiert. Sie kann jedoch auch als separate Information in der Nachricht VMSG eincodiert sein. Zudem weist die Nachricht VMSG zusätzlich noch die erste und die zweite Anwendungsinformation ANWI1, ANW2 auf. Die erste und die zweite Anwendungsinformation ANWI1, ANW2 können dabei jeweils im Zertifikat eincodiert sein oder sie können als separate Information in der Nachricht VMSG eincodiert sein.

In einem nachfolgenden zweiten Schritt T2 wird die Überprüfung PROOF1 der Authentizität des Zertifikats mit Hilfe der Signatur SIG des Zertifikats ZERT durchgeführt. Eine dritte Einheit M3 realisiert den zweiten Schritt T2 und eine fünfte Einheit M5 den dritten Schritt T3.

In einem dritten Schritt T3 wird überprüft, ob die Überprüfung PROOF1 positiv oder negativ ist. Ist sie negativ, so wird der dritte Schritt T3 im Pfad N verlassen und nachfolgend ein zehnter Schritt T10 ausgeführt. War die Überprüfung PROOF1 positiv, so wird der dritte Schritt T3 über den Pfad J verlassen und nachfolgend ein vierter Schritt T4 ausgeführt.

In dem vierten Schritt T4 wird zunächst die Gültigkeitsinformation, repräsentiert durch das maximal zulässige Alter MAXG, verwendet, um die zu der Ermittlung der Zulässigkeit vorliegenden Positivlisten WL auszuwählen. Liegen der Überprüfungseinheit Z keine Positivlisten WL vor, die die Gültigkeitsinformation GI bezüglich erfüllen, so ist eine erste Stufe der Ermittlung PROOF2 negativ. Ansonsten ist diese erste Stufe positiv.

In einem fünften Schritt T5 wird bei einem negativen Ergebnis der ersten Stufe ein Pfad N beschritten, der in einem neunten Schritt T9 endet. Ansonsten führt der fünfte Schritt T5 das Ablaufdiagramm über einen Pfad J zu einem sechsten Schritt T6.

In einem sechsten Schritt T6 wird im Rahmen einer zweiten Stufe der Ermittlung PROOF2 bestimmt, ob das Zertifikat bzw. eine davon abgeleiteter Suchwert in der Positivliste WL zu finden ist. Ist ein Eintrag für das Zertifikat bzw. der abgeleiteten Suchwert in der Positivliste vorhanden, der sich auf das Zertifikat bezieht, so ist die zweite Stufe der Ermittlung im sechsten Schritt T6 positiv. Ansonsten ist die zweite Stufe im sechsten Schritt T6 negativ.

In einem nachfolgenden siebten Schritt T7 wird die zweite Stufe der Ermittlung des sechsten Schritts T6 analysiert. Ist dieser negativ, so wird der siebte Schritt über den Pfad N verlassen und das Ablaufdiagramm im neunten Schritt T9 fortgesetzt. Ansonsten führt das Ablaufdiagramm über den Pfad J von dem siebten Schritt zum achten Schritt T8.

In einer weiteren Ausführungsform der Erfindung kann die Nachricht VMSG derart aufgebaut sein, dass lediglich die Zulässigkeitsinformation ZINFO in Form eines Hinweissignals FLG ausgebildet ist, d.h. keine Gültigkeitsinformation GI in der Nachricht VMSG vorhanden ist. In diesem Fall wird die Ermittlung PROOF2 der Zulässigkeit lediglich durch die Schritte T6, T7 verwirklicht. Die vierten und fünften Schritte T4, T5 werden dabei übersprungen. Eine vierte Einheit realisiert den vierten bzw. sechsten Schritt T4, T6 und die fünfte Einheit M5 den fünften bzw. siebten Schritt T6, F7

In einem achten Schritt T8 befindet sich das Ablaufdiagramm, falls sowohl die Überprüfung PROOF1 auf Authentizität des Zertifikats als auch die Ermittlung PROOF2 bezüglich einer Zulässigkeit des Zertifikats anhand der Positivliste WL jeweils positiv ist. In diesem Fall wird in dem achten Schritt T8 das Gerät, d.h. die Pumpe G, autorisiert eine erste Kategorie K1 an Anwendungen, wie bspw. der ersten Anwendung APP1, durchzuführen. Nach Abschluss des Anwendens der ersten Kategorie K1 an Anwendungen wird der achte Schritt durch Aufruf des letzten Schritts T10 beendet. Die erste Kategorie an Anwendungen kann aber muss nicht durch die erste Anwendungsinformation definiert sein. So kann per default festgelegt sein, dass die erste Kategorie an Anwendungen eine Freigabe des Geräts zum Betrieb darstellt.

In dem neunten Schritt T9 zeigt das Ablaufdiagramm an, dass die Überprüfung auf Authentizität des Zertifikats positiv war. Jedoch ist in diesem neunten Schritt T9 die Ermittlung der Zulässigkeit des Zertifikats anhand der Positivliste negativ. Somit kann im neunten Schritt die Pumpe eine zweite Kategorie K2 an Anwendungen autorisiert werden. Die zweite Kategorie an Anwendungen kann beispielsweise dadurch gestaltet sein, dass keine Anwendungen ausgeführt werden dürfen und die Pumpe für den Einsatz in der industriellen Anlage nicht zugelassen wird. Alternativ kann im neunten Schritt T9 durch die Pumpe eine zweite Anwendung APP2, die beispielsweise nicht sicherheitskritisch ist, durchgeführt werden. Nach Abschluss des neunten Schritts T9 wird das Ablaufdiagramm in den zehnten Schritt T10 fortgesetzt.

In dem zehnten Schritt T10 wird das Ablaufdiagramm der Figur 5 beendet.

Die Ermittlung PROOF2 bezüglich der Zulässigkeit des Zertifikats kann anhand zumindest eines der folgenden Ausführungsparameter APA des Zertifikats und der Positivliste durchgeführt werden:
- Seriennummer des Zertifikats: Anhand der Seriennummer des Zertifikats, die in der Nachricht VMSG enthalten ist, kann die Überprüfungseinheit Z das Zertifikat in der Positivliste WL lokalisieren.
- Aussteller des Zertifikats: Die Überprüfungseinheit Z kann ein Durchführen der zweiten Überprüfung auch abhängig von dem Aussteller des Zertifikats durchführen. Ist beispielsweise ein Aussteller des Zertifikats in der Positivliste nicht verzeichnet, so ist die zweite Überprüfung PROOF2 negativ.

- Fingerprint des Zertifikats: Unter Fingerprint des Zertifikats wird verstanden, dass nicht das Zertifikat an sich, sondern das Zertifikat in einer codierten Form, z.B. in einer Hash-Codierung, zur Durchführung der Ermittlung der Zulässigkeit verwendet wird. So kann der Hash-Wert des Zertifikats durch die Überprüfungseinheit aus dem Zertifikat der Nachricht VMSG gewonnen werden. Nachfolgend wird dieser Hash-Wert verwendet, um in der Positivliste einen gleichlautenden Hash-Wert zu identifizieren. Wird der gleichlautende Hash-Wert nicht gefunden, so ist die Ermittlung negativ, ansonsten positiv.
- Fingerprint des öffentlichen Schlüssels im Signatur: Die Vorgehensweise hierzu ist analog zum Punkt "Fingerprint des Zertifikats", wobei anstelle des gesamten Zertifikats nur der öffentliche Schlüssel die Signatur zu der Ermittlung eingesetzt wird
- Kopie des Zertifikats: Die Vorgehensweise ist analog zu "Fingerprint des Zertifikats", wobei anstelle einer codierten Form des Zertifikats in dieser Variante der Erfindung das Zertifikat im Klartext verwendet werden kann. Somit stellt das Zertifikat im Klartext den Index dar, der in der Positivliste gesucht werden soll.

In einer Weiterbildung der Erfindung kann die Nachricht auch einen der zuvor genannten Ausführungsparameter APA aufweisen. Hierdurch wird der Überprüfungseinheit mitgeteilt, welcher der Parameter zur Lokalisierung des Zertifikats in der Positivliste verwendet werden soll.

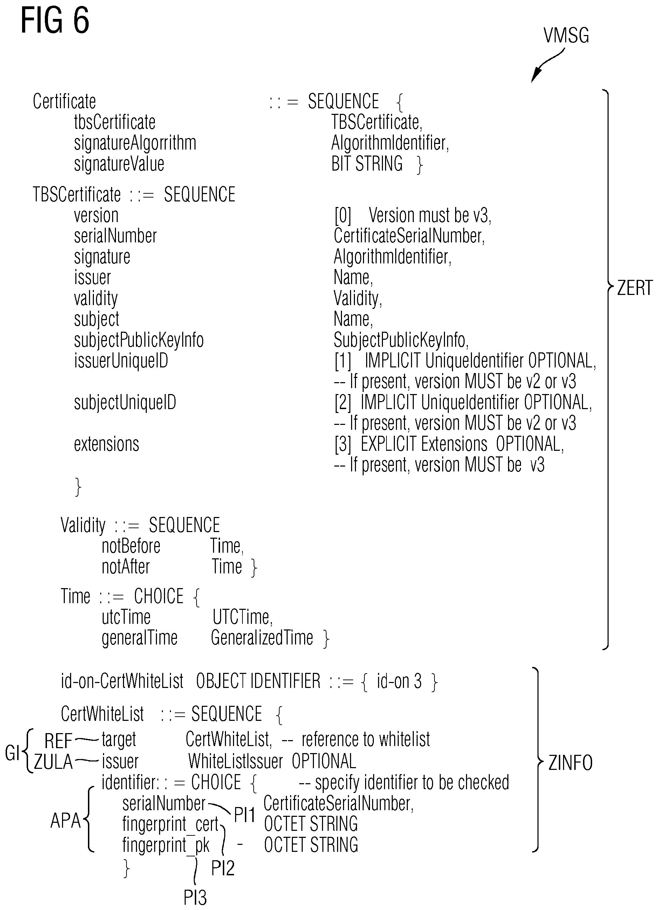

Figur 6 zeigt eine Nachricht mit dem Zertifikat ZERT und der Zulässigkeitsinformation ZINFO. Das Beispiel gemäß Figur 6 stellt die Codierung gemäß X.509 mittels ASN.1-Codierung (ASN.1 = Abstract Syntax Notation One) für ein sogenanntes Identitätszertifikat dar. Die Nachricht gemäß Figur 6 unterteilt sich in den Bereich Zertifikat ZERT und in den Bereich beschreibend die Zulässigkeitsinformation ZINFO. Die Zulässigkeitsinformation ZINFO beschreibt ferner die Gültigkeitsinformationen GI Angabe auf zu verwendende Positivliste REF und zulässiger Aussteller ZULA der Positivliste, sowie Ausführungsparameter APA zur Durchführung der Ermittlung der Zulässigkeit PROOF2. Eine Besonderheit bezüglich der Ausführungsparameter APA ist, dass der Überprüfungseinheit Z drei Optionen zur Durchführung der Ermittlung mitgegeben werden. So kann die Überprüfungseinheit Z die zweite Überprüfung anhand der Seriennummer, des Fingerprints des Zertifikats oder des Fingerprints des öffentlichen Schlüssels durchführen. Anstelle der Verwendung eines Identitätszertifikats kann die Erfindung auch für ein Attributzertifikat eingesetzt werden. Die Vorgehensweise hierbei ist analog zu der Darstellung in Figur 6.

Eine erste Vorrichtung zum Erzeugen der Nachricht wird durch die erste und zweite Einheit realisiert. Die erste und zweite Einheit stellen somit die Überprüfungseinheit Z dar. Die zweite Vorrichtung zum Autorisieren des Geräts wird durch die dritte, vierte und fünfte Einheit Mittel realisiert.

Die in der Beschreibung dargestellten Einheiten können in Software, Hardware oder in einer Kombination aus Software und Hardware realisiert werden. Dabei können einzelne Schritte der Erfindung in einer maschinenlesbaren Form in einem Speicher abgelegt werden, wobei der Speicher mit einem Prozessor derart verbunden ist, dass der Prozessor die maschinenlesbaren Befehle ausliest und verarbeiten kann. Ferner können dem Prozessor Ein- und Ausgabeschnittstellen zum Austausch von Daten zu dem Prozessor bzw. von dem Prozessor angekoppelt sein.

Die Erfindung und ihre Weiterbildungen wurden anhand von mehreren Beispielen erläutert. Die Erfindung ist nicht auf diese speziellen Ausführungsbeispiele beschränkt. Zudem können die Ausführungsbeispiele und die Weiterbildungen in beliebiger Art und Weise kombiniert werden.

## Patentansprüche

1. Verfahren zum Autorisieren eines Geräts (G) anhand einer Nachricht (VMSG), wobei die Nachricht (VMSG) ein Zertifikat (ZERT) des Geräts (G) umfasst und das Zertifikat (ZERT) eine Signatur (SIG) zu einer Überprüfung (PROOF1) einer Authentizität des Zertifikats (ZERT) aufweist,
das Verfahren umfassend:
Hinzufügen einer Zulässigkeitsinformation (ZINFO) zu dem Zertifikat (ZERT),
wobei die Zulässigkeitsinformation (ZINFO) mittels eines Hinweissignals (FLG) anzeigt, dass neben der Überprüfung der Signatur (SIG) auch eine Ermittlung einer Zulässigkeit des Zertifikats (ZERT) anhand einer Positivliste (WL) durchzuführen ist, und
Autorisieren des Gerätes (G) für ein Anwenden einer ersten Kategorie (K1) an zumindest einer Anwendung, falls
(a) die Überprüfung (PROOF1) der Authentizität des Zertifikats (ZERT) positiv durchgeführt wird, und
(b) die Ermittlung (PROOF2) der Zulässigkeit des Zertifikats (ZERT) anhand der Positivliste (WL) positiv durchgeführt wird.

2. Verfahren zum Autorisieren eines Geräts (G) anhand einer Nachricht (VMSG), nach Anspruch 1, **dadurch gekennzeichnet, dass**
das Gerät (G) für ein Anwenden der zweiten Kategorie (K2) an zumindest einer Anwendung autorisiert wird, falls
(a) die Überprüfung (PROOF1) der Authentizität des Zertifikats (ZERT) positiv durchgeführt wird, und
(b) die Ermittlung (PROOF2) der Zulässigkeit des Zertifikats (ZERT) anhand der Positivliste (WL) negativ durchgeführt wird.

3. Verfahren nach einem der Ansprüche 1 und 2,
**dadurch gekennzeichnet, dass**
die Ermittlung (PROOF2) der Zulässigkeit des Zertifikats (ZERT) zumindest anhand eines der folgenden Ausführungsparameter (APA) durchgeführt wird, wobei der jeweilige Ausführungsparameter (APA) eine Eigenschaft des Zertifikats (ZERT) wiedergibt:
- Seriennummer des Zertifikats (PI1);
- Aussteller des Zertifikats (PI4);
- Fingerprint des Zertifikates (PI2);
- Fingerprint des öffentlichen Schlüssels (PI3);
- Kopie des Zertifikates (PI5).

4. Zweite Vorrichtung (VOR2) zum Autorisieren eines Geräts (G) anhand einer Nachricht (VMSG), wobei die Nachricht (VMSG) ein Zertifikat (ZERT) eines Geräts (G) umfasst und das Zertifikat (ZERT) eine Signatur (SIG) zu einer Überprüfung (PROOF1) einer Authentizität des Zertifikats (ZERT) aufweist, und wobei dem Zertifikat (ZERT) eine Zulässigkeitsinformation (ZINFO) hinzugefügt ist,
wobei die Zulässigkeitsinformation (ZINFO) mittels eines Hinweissignals (FLG) anzeigt, dass neben der Überprüfung der Signatur (SIG) auch eine Ermittlung einer Zulässigkeit des Zertifikats (ZERT) anhand einer Positivliste (WL) durchzuführen ist,
wobei der Zulässigkeitsinformation (ZINFO) eine Gültigkeitsinformation (GI) hinzugefügt ist, wobei die Gültigkeitsinformation (GI) zumindest einen der folgenden Parameter aufweist, der die bei der Ermittlung (PROOF2) der Zulässigkeit zu verwendenden Positivliste (WL) charakterisiert:
- Zulässiger Aussteller (ZULA) der Positivliste (WL);
- Maximal zulässiges Alter (MAXG) der Positivliste (WL);
- Anwendungsumgebungsparameter (AUP) der Positivliste (WL);
- Angabe (REF) der zu verwendenden Positivliste (WL) mit einer dritten Einheit (M3) zur Überprüfung (PROOF1) einer Authentizität des Zertifikats (ZERT) der Nachricht (VMSG), einer vierten Einheit (M4) zur Ermittlung (PROOF2) der Zulässigkeit des Zertifikats (ZERT) anhand der Positivliste (WL), einer fünften Einheit (M5) zum Autorisieren des Geräts (G) für ein Anwenden einer ersten Kategorie (K1) an zumindest einer Anwendung, falls die Überprüfung (PROOF1) und die Ermittlung (PROOF2) jeweils positiv sind.

5. Zweite Vorrichtung (VOR2) gemäß Anspruch 4,
wobei die fünfte Einheit (M5) ferner ausgebildet ist zum Autorisieren des Geräts (G) für ein Anwenden einer zweiten Kategorie (K2) an zumindest einer Anwendung, falls die Überprüfung (PROOF1) positiv und die Ermittlung (PORRF2) negativ sind.

6. Zweite Vorrichtung (VOR2) gemäß Anspruch 4 oder 5,
wobei die dritte Einheit (M3), die vierte Einheit (M4) und die fünfte Einheit (M5) ferner derart ausgebildet sind, dass zumindest eine der Weiterbildungen der Zulässigkeitsinformation (ZINFO) ausführbar ist, wobei die Weiterbildungen der Zulässigkeitsinformation (ZINFO) ausgewählt sind aus der Gruppe bestehend aus:
der Gültigkeitsinformation (GI), wobei die Gültigkeitsinformation (GI) zumindest einen der folgenden Parameter aufweist, der die, bei der Ermittlung (PROOF2) der Zulässigkeit zu verwendenden, Positivliste (WL) charakterisiert:
- Zulässiger Aussteller (ZULA) der Positivliste (WL);
- Maximal zulässiges Alter (MAXG) der Positivliste (WL);
- Anwendungsumgebungsparameter (AUP) der Positivliste (WL),
- Angabe (REF) der zu verwendende Positivliste (WL), und
einer ersten Anwendungsinformation (ANWI1) zum Durchführen von einer ersten Anwendung (APP1) des Geräts (G), wobei die erste Anwendungsinformation (ANWI1) im Falle eines positiven Autorisierens des Geräts (G) aufgrund (i) einer positiven Überprüfung der Authentizität der Signatur (SIG1) und (ii) eines positiven Ermittelns (PROOF2) der Zulässigkeit des Zertifikats (ZERT) anhand der Positivliste (WL) angewendet werden kann, und/oder
einer zweite Anwendungsinformation (ANWI2) zum Durchführen von einer zweiten Anwendung (APP2) des Geräts (G), wobei die zweite Anwendungsinformation (ANWI2) im Falle eines positiven Autorisierens des Geräts (G) aufgrund (i) einer positiven Überprüfung der Authentizität der Signatur (SIG1) und (ii) einer negativen Ermittlung (PROOF2) der Zulässigkeit des Zertifikats (ZERT) anhand der Positivliste (WL) angewandt werden kann, und/oder
zumindest einem der folgenden Ausführungsparameter (APA), wobei der jeweilige Ausführungsparameter (APA) beschreibt, anhand welcher Eigenschaft des Zertifikats (ZERT) die Ermittlung (PROOF2) durchgeführt werden kann:
- Seriennummer des Zertifikats (PI1);
- Aussteller des Zertifikats (PI4);
- Fingerprint des Zertifikates (PI2);
- Fingerprint des öffentlichen Schlüssels (PI3);
- Kopie des Zertifikates (PI5).

## Claims

1. Method for authorizing a device (G) by means of a message (VMSG), wherein the message (VMSG) comprises a certificate (ZERT) of the device (G) and the certificate (ZERT) exhibits a signature (SIG) for a check (PROOF1) of an authenticity of the certificate (ZERT),
the method comprising:
adding an item of permissibility information (ZINFO) to the certificate (ZERT),
wherein the permissibility information (ZINFO) indicates, by means of a flag signal (FLG), that, apart from checking the signature (SIG), a determination of a permissibility of the certificate (ZERT) by means of a positive list (WL) is also to be performed, and
authorizing the device (G) for applying a first category (K1) to at least one application if
(a) the checking (PROOF1) of the authenticity of the certificate (ZERT) is performed positively, and
(b) the determination (PROOF2) of the permissibility of the certificate (ZERT) by means of the positive list (WL) is performed positively.

2. Method for authorizing a device (G) by means of a message (VMSG), according to Claim 1, **characterized in that** the device (G) is authorized for applying the second category (K2) to at least one application if
(a) the checking (PROOF1) of the authenticity of the certificate (ZERT) is performed positively, and
(b) the determination (PROOF2) of the permissibility of the certificate (ZERT) by means of the positive list (WL) is performed negatively.

3. Method according to either of Claims 1 and 2, **characterized in that**
the determination (PROOF2) of the permissibility of the certificate (ZERT) is performed at least by means of one of the following execution parameters (APA), wherein the respective execution parameter (APA) reproduces a characteristic of the certificate (ZERT):
- serial number of the certificate (PI1);
- issuer of the certificate (PI4);
- fingerprint of the certificate (PI2);
- fingerprint of the public key (PI3);
- copy of the certificate (PI5).

4. Second apparatus (VOR2) for authorizing a device (G) by means of a message (VMSG), wherein the message (VMSG) comprises a certificate (ZERT) of a device (G) and the certificate (ZERT) exhibits a signature (SIG) for a check (PROOF1) of an authenticity of the certificate (ZERT),
and wherein an item of permissibility information (ZINFO) is added to the certificate (ZERT),
wherein the permissibility information (ZINFO) indicates, by means of a flag signal (FLG) , that, apart from checking the signature (SIG), a determination of a permissibility of the certificate (ZERT) by means of a positive list (WL) is also to be performed,
wherein an item of validity information (GI) is added to the permissibility information (ZINFO), wherein the validity information (GI) has at least one of the following parameters, which characterizes the positive list (WL) to be used in the determination (PROOF2) of the permissibility:
- permissible issuer (ZULA) of the positive list (WL);
- maximum permissible age (MAXG) of the positive list (WL);
- application environment parameter (AUP) of the positive list (WL),
- reference (REF) of the positive list (WL) to be used,
comprising a third unit (M3) for checking (PROOF1) an authenticity of the certificate (ZERT) of the message (VMSG), a fourth unit (M4) for determining (PROOF2) the permissibility of the certificate (ZERT) by means of the positive list (WL), a fifth unit (M5) for authorizing the device (G) for applying a first category (K1) to at least one application if the check (PROOF1) and the determination (PROOF2) are in each case positive.

5. Second apparatus (VOR2) according to Claim 4,
wherein the fifth unit (M5) is also designed for authorizing the device (G) for applying a second category (K2) to at least one application if the check (PROOF1) is positive and the determination (PROOF2) is negative.

6. Second apparatus (VOR2) according to Claim 4 or 5,
wherein the third unit (M3), the fourth unit (M4) and the fifth unit (M5) are also configured in such a manner that at least one of the developments of the permissibility information (ZINFO) is able to be executed, wherein the developments of the permissibility information (ZINFO) are selected from the group consisting of:
the validity information (GI), wherein the validity information (GI) has at least one of the following parameters, which characterizes the positive list (WL) to be used in the determination (PROOF2) of the permissibility:
- permissible issuer (ZULA) of the positive list (WL);
- maximum permissible age (MAXG) of the positive list (WL);
- application environment parameter (AUP) of the positive list (WL),
- reference (REF) of the positive list (WL) to be used, and
a first application information item (ANWI1) for performing a first application (APP1) of the device (G), wherein the first application information (ANWI1) can be applied in the case of a positive authorization of the device (G) on the basis (i) of a positive check of the authenticity of the signature (SIG1) and (ii) of a positive determination (PROOF2) of the permissibility of the certificate (ZERT) by means of the positive list (WL), and/or
a second application information item (ANWI2) for performing a second application (APP2) of the device (G), wherein the second application information (ANWI2) can be applied in the case of a positive authorization of the device (G) on the basis (i) of a positive check of the authenticity of the signature (SIG1) and (ii) of a negative determination (PROOF2) of the permissibility of the certificate (ZERT) by means of the positive list (WL), and/or
at least one of the following execution parameters (APA), wherein the respective execution parameter (APA) describes by means of which characteristic of the certificate (ZERT) the determination (PROOF2) can be performed:
- serial number of the certificate (PI1);
- issuer of the certificate (PI4);
- fingerprint of the certificate (PI2);
- fingerprint of the public key (PI3);
- copy of the certificate (PI5).

## Revendications

1. Procédé d'autorisation d'un appareil (G) à l'aide d'un message (VMSG), dans lequel le message (VMSG), comprend un certificat (ZERT), de l'appareil (G) et le certificat (ZERT) a une signature (SIG) pour un contrôle (PROOF1) d'une authenticité du certificat (ZERT),
le procédé comprenant :
addition au certificat (ZERT) d'une information (ZINFO) d'admissibilité,
dans lequel l'information (ZINFO) d'admissibilité indique au moyen d'un signal (FLG) d'indication que, outre le contrôle de la signature (SIG), une détermination d'une admissibilité du certificat (ZERT) est à effectuer à l'aide de la liste (WL) positive et,
autorisation de l'appareil (G) pour une application d'une première catégorie (K1) d'au moins une application si,
a) le contrôle (PROOF1) de l'authenticité du certificat (ZERT) est effectué positivement,
b) la détermination (PROOF2) de l'admissibilité du certificat (ZERT) est effectuée positivement à l'aide de la liste (WL) positive.

2. Procédé d'autorisation d'un appareil (G) à l'aide d'un message (VMSG), suivant la revendication 1, **caractérisé en ce que**
on autorise l'appareil (G) pour une application de la deuxième catégorie (K2) d'au moins une application si,
a) le contrôle (PROOF1) de l'authenticité du certificat (ZERT) est effectué positivement et,
b) la détermination (PROOF2) de l'admissibilité du certificat (ZERT) à l'aide de la liste (WL) positive est effectuée négativement.

3. Procédé suivant l'une des revendications 1 et 2,
**caractérisé en ce que** l'
on effectue la détermination (PROOF2) de l'admissibilité du certificat (ZERT) au moins à l'aide de l'un des paramètres (APA) d'exécution suivante, dans lequel le paramètre (APA) d'exécution respectif représente une propriété du certificat (ZERT) :
- numéro de série du certificat (PI1) ;
- autorité qui délivre le certificat (PI4) ;
- empreinte digitale du certificat (PI2) ;
- empreinte digitale de la clé public (PI3) ;
- copie du certificat (PI5).

4. Deuxième dispositif (VOR2) d'autorisation d'un appareil (G) à l'aide d'un message (VMSG), dans lequel le message (VMSG) comprend un certificat (ZERT) d'un appareil (G) et le certificat (ZERT) a une signature (SIG) de contrôle (PROOF1) d'une authenticité du certificat (ZERT) et, dans lequel une information (ZINFO) d'admissibilité est ajoutée au certificat (ZERT),
dans lequel l'information (ZINFO) d'admissibilité indique au moyen d'un signal (FLG) d'indication que, outre le contrôle de la signature (SIG), une détermination d'une admissibilité du certificat (ZERT) est à effectuer à l'aide de la liste (WL) positive,
dans lequel une information (GI) de validité est ajoutée à la formation (ZINFO) d'admissibilité, dans lequel l'information (GI) de validité a au moins l'un des paramètres suivants qui caractérise la liste (WL) positive utilisée lors de la détermination (PROOF2) de l'admissibilité :
- autorité (ZULA) admissible de délivrance de la liste (WL) positive ;
- âge (MAXG) maximum admissible de la liste (WL) positive ;
- paramètre (AUP) d'environnement de l'application de la liste (WL) positive ;
- indication (REF) de la liste (WL) positive à utiliser par une troisième unité (M3) de contrôle (PROOF1) d'une authenticité du certificat (ZERT) du message (VMSG), une quatrième unité (M4) de détermination (PROOF2) de l'admissibilité du certificat (ZERT) à l'aide de la liste (WL) positive, une cinquième unité (M5) d'autorisation de l'appareil (G) pour une application d'une première catégorie (K1) d'au moins une application, puis le contrôle (PROOF1) et la détermination (PROOF2) sont chacune positive.

5. Deuxième dispositif (VOR2) suivant la revendication 4,
dans lequel la cinquième unité (M5) est constituée en outre, pour autoriser l'appareil (G) pour une application d'une deuxième catégorie (K2) d'au moins une application, si le contrôle (PROOF1) est positif et si la détermination (PROOF2) est négative.

6. Deuxième dispositif (VOR2) suivant la revendication 4 ou 5, dans lequel la troisième unité (M3), la quatrième unité (M4) et la cinquième unité (M5) sont constituées en outre, de manière à pouvoir réaliser l'une des reformations de l'information (ZINFO) d'admissibilité, dans lequel les reformations de l'information (ZINFO) d'admissibilité sont choisies dans le groupe constitué :
de l'information (GI) de validité, dans lequel l'information (GI) de validité a au moins l'un des paramètres suivants qui caractérise la liste (WL) positive à utiliser lors de la détermination (PROOF2) de l'admissibilité :
- autorité (ZULA) admissible de délivrance de la liste (WL) positive ;
- âge (MAXG) maximum admissible de la liste (WL) positive ;
- paramètre (AUP) d'environnement de l'application de la liste (WL) positive ;
- de l'indication (REF) de la liste (WL) positive à utiliser
et d'une première information (ANWI1) d'application pour effectuer une première application (APP1) de l'appareil (G), dans lequel la première information (ANWI1) d'application peut être appliquée dans le cas d'une autorisation positive de l'appareil (G) en raison (i) d'un contrôle positif de l'authenticité de la signature (SIG1) et (ii) une détermination (PROOF2) positive de l'admissibilité du certificat (ZERT) à l'aide de la liste (WL) positive et/ou
d'une deuxième information (ANWI2) d'application pour effectuer une deuxième application (APP2) de l'appareil (G), dans lequel la deuxième information (ANWI2) d'application, peut être appliquée dans le cas d'une autorisation positive de l'appareil (G) en raison (i) d'un contrôle positif de l'authenticité de la signature (SIG1) et (ii) d'une détermination (PROOF2) négative de l'admissibilité du certificat (ZERT) à l'aide de la liste (WL) positive, et/ou
d'au moins l'un des paramètres (APA) d'exécution suivant, dans lequel le paramètre (APA) respectif d'exécution décrit la propriété du certificat (ZERT) à l'aide de laquelle la détermination (PROOF2) peut être effectuée :
- numéro de série du certificat (PI1) ;
- autorité qui délivre le certificat (PI4) ;
- empreinte digitale du certificat (PI2) ;
- empreinte digitale de la clé public (PI3) ;
- copie du certificat (PI5).
